# NEW EUROPEAN PATENT SPECIFICATION

(11) **EP 0 467 630 B2**
(45) Date of publication and mention of the opposition decision: **11.03.1998**
(45) Mention of the grant of the patent: 13.09.1995
(21) Application number: 91306415.0
(22) Date of filing: 16.07.1991
(51) Int. Cl.: F16G 1/28, F16G 5/20

(54) **V-ribbed belt**
Keilrippenriemen
Courroie à nervures en V

(30) Priority: 19.07.1990 JP 77315/90
(43) Date of publication of application: 22.01.1992
(73) Proprietor: MITSUBOSHI BELTING LTD., Nagata-ku Kobe City Hyogo, pref. (JP)
(72) Inventor: Sakashita, Makoto, Himeji-shi, Hyogo (JP); Kumazaki, Toshimi, Nishi-ku, Kobe, Hyogo (JP); Mishima, Kyoichi, Suzurandai, Kita-ku, Kobe, Hyogo (JP)
(74) Representative: Bond, Bentley George

(56) References cited:
- US-A- 3 839 116
- US-A- 3 951 006
- US-A- 4 790 802
- PATENT ABSTRACTS OF JAPAN, vol. 3, no. 35 (M-53), 24th March 1979;& JP-A-54 9347 (TSUBAKIMOTO CHAIN) 24th January 1979
- PATENT ABSTRACTS OF JAPAN, vol. 14, no. 203 (M-966)[4146], 25th April 1990;& JP-A-2 42 230 (BANDO CHEM.) 13 February 1990
- PATENT ABSTRACTS OF JAPAN, vol. 11, no. 28 (M-557)[2475], 27th January 1987;& JP-A-61 199 936 (BANDO CHEM.) 4th September 1986
- Engineering Standard - Specifications for drives using V-ribbed Belts (H, J, K, L and M Cross Sections), Rubber Manufacturers Associciation, IP-26, 1977, page 6;
- Du Pont technical information entitled "Processing Yarns of KEVLAR Aramid for Weaving", Bulletin K-3, December 1978, page 3;
- Du Pont Publication catalogue E38532 entitled "KEVLAR aramid - The fiber that lets you re-think strength and weight, Du Pont", front and back page and pages 3, 4, 8-11 and 19;
- Textbook "Belt Selection and Application for Engineers", edited by Wallace D. Erickson, Gates Rubber Company, Denver, Colorado, Marcel Dekker, Inc., Copyright 1987 by Marcel Dekker, Inc., pages 10-13, 183-207, 364 and 365;

## Description

This invention relates to V-ribbed power transmission belts and, more particularly, to a belt with load carrying cords constructed to allow the formation of a low profile, flexible belt, yet one which is highly durable under heavy load. A V-ribbed belt as defined in the preamble of claim 1 is known in this technical field.

There are many environments in which V-ribbed belts are preferred over conventional V-belts. V-ribbed belts are preferred in environments in which a high degree of flexibility if required, as when the belts are trained about relatively small diameter pulleys.

In a typical V-ribbed belt, load carrying cords of polyester are embedded in a cushion rubber layer. A cover cloth tension rubber layer is laminated on the outer surface or the cushion rubber layer with a compression rubber layer laminated on the inside surface of the cushion rubber layer. A plurality of V-shaped ribs are formed in the lower surface of the compression rubber layer.

Due to the relatively thin nature of V-ribbed belts, they are prone to stretching, particularly when subjected to high loads. To control belt elongation, the load carrying cords have conventionally been thickened which, while addressing the problem of elongation, results in an overall thickened belt, which inherently reduces the flexibility of the belt. The load carrying cords have generally been made of the following thickness: 5,000-6,600d for K-type V-ribbed belt; 6,000-16,500d for L-type V-ribbed belt; and 6,000 to 26,400d for M-type V-ribbed belt.

It is common for the lateral spacing between the center of the cords to be in the range of 1.05-1.20 times as large as the diameter of the individual cords. It is also common to construct V-ribbed belts wherein the thickness between the inside surface of the belt and the outside surface of the belt is in the range of 1.4-1.6 times as large as the lateral spacing between the center lines of adjacent ribs, i.e. the belt pitch.

The problems with conventional V-ribbed belts can best be explained with respect to the automotive environment. Many automobile engines are now constructed using a serpentine belt system. Such systems employ a single V-ribbed belt which is wrapped around the sheaves associated with a plurality of accessories to simultaneously drive those accessories. For example, air conditioning units, alternators, and other accessories with sheaves mounted in a single plane are simultaneously driven by a single belt. The V-ribbed belt is preferred in that it readily conforms to even small pulleys in following a circuitous route in driving the various components. A large degree of flexibility is required in such systems which normally require that both the inside and outside surfaces of the belt drive the sheaves. Thus, the belt is bent severely in both directions. Because the V-ribbed belt is so flexible, it is possible to construct the engine in a very compact configuration. Further efficiency and space savings result from the ability to use a single belt, rather than a plurality of belts.

The V-ribbed belt in the serpentine drive system, and like environments, does, however, have a number of drawbacks, attributable in great part to the severe angles at which the belts are bent during operation. There is a tendency of conventional V-ribbed belts to rupture prematurely in operation. To make the belts more flexible and to avoid the problem of rupture, it is known to reduce the height of the ribs. However, if the rib height is reduced excessively, there is insufficient penetration of the pulley grooves by the ribs and belt slippage may result.

The above-mentioned problem of belt elongation is particularly vexatious in serpentine drive systems due to the substantial total lenght of the belt. That is, if the V-ribbed belt is constructed to have the same percentage of elongation as conventional type belts, the elongation problem is aggravated by reason of the considerably longer length of the V-ribbed belt in the serpentine system. The result is that the tension on the belt is decreased, which may alter the performance of one or more of the driven components/accessories.

While a small percentage of elongation is desired, conventional belts using conventional polyester cords have generally had a high percentage of elongation. After the belt is stretched, its tension is reduced and slippage may occur.

One solution to the above problem has been to provide an automatic tensioner to bear against the belt to compensate for the belt elongation. Belts that elongate readily place a large burden on the belt tensioners. That is, the cords, which are commonly polyester, stretch and contract repetitively in response to variations in the rotation of the engine. The constantly readjusting automatic tensioner is thus prone to failure.

Another problem with prior art V-ribbed belts is that the load carrying cords are often ineffectually bonded to the cushion rubber layer in which the cords reside. It is common to place a first cushion rubber layer over a forming drum, wrap the load carrying cords around the first cushion layer, and subsequently wrap a second cushion layer around the cords to captively embed the cords. Due to the relatively large size of the cords required to resist elongation, the cords do not effectively embed in the underlying layer on the forming drum. This necessitates the second cushion rubber layer and, even then, there may be ineffectual bonding between the cords and cushion rubber layer.

The present invention is specitically directed to overcoming the above enumerated problems in a novel and simple manner.

It is a principle objective of the present invention to provide a V-ribbed belt which can be made relatively thin, to be highly flexible, yet one which is capable of operating under heavy loads without detrimental elongation. These features make the inventive belt particularly desirable for serpentine drive systems in automobile engines.

The present invention comprehends as defined by the features of claim 1 a V-ribbed belt having a plurality of laterally spaced longitudinally extending ribs, a load carrying section, and a plurality of lengthwise cords in the load carrying section wherein each cord has a denier of 2,000-4000d.

The cords are preferably of aramid fiber, rather than conventional polyester. The load carrying cords are also finer than those used in conventional belts. The result is that the overall thickness of the belt is decreased, contributing to greater belt flexibility. Further, the thin load carrying cords are themselves readily bendable. Even after repeated bending in the environment of the serpentine drive system, very little heat is generated by belt flexure. This contributes greatly to the durability of the inventive V-ribbed belt.

It has been found that when the aramid fiber has 2,000d or less, the elongation of the belt is greater than desired, particularly in serpentine drive systems. Additionally, the cords of 2,000d or less tend to readily rupture, generally making them unsuitable for use in such environments.

The total thickness of the V-ribbed belt, from the inside surface to the outside surface thereof, according to the present invention, is 0.95-1.15 times as large as the pitch of the ribs of the belt. The pitch of the belt is the lateral dimension between the centers of adjacent ribs. This results in a thin belt which is highly flexible.

To prevent entanglement between the fibers/filaments of adjacent load carrying cords, the present invention contemplates that the distance between the centers of the load carrying cords is at least 1.05 times as large as the diameter of the load carrying cords. Too large a distance between adjacent cords may result in a diminished load carrying capability and possible excessive elongation. To avoid these problems, the invention contemplates that the distance between the cord centers be preferably no more than 1.20 times as large as the diameter of the individual cords.

In a preferred form, the individual cords are defined by at least two, and preferably three, twisted filaments. The use of three filaments effects an interlocking of the individual filaments, each with the other. With two wrapped filaments, in cross-section, the filaments define a figure eight. In this construction, the filaments do not interlock and may slightly rotate over one another about their lengths.

Preferably, the load carrying cords are embedded in a cushion rubber layer made from at least one of NR, CR, HNBR, and BR.

In one form of the invention, the spacing between the inside edge of the cords and the inside surface of the cushion rubber layer is approximately equal to 0.45 times the diameter of the cords.

The invention further contemplates a V-ribbed belt wherein the cushion rubber layer and a compression rubber layer, in which the ribs are formed, are both made of the same material. Preferably, the compression rubber layer is harder than the cushion rubber layer.

The invention further contemplates a belt in which short staple reinforcing fibers are embedded in the compression section to be aligned laterally of the belt. A canvas layer may be provided on the outer surface of the belt.

The invention still further contemplates a method of forming a V-ribbed belt which allows a thinner cushion rubber layer to be employed, thereby reducing the overall thickness of the belt and increasing its flexibility.

More specifically, the method of forming a V-ribbed belt according to the present invention consists of the steps of winding a first cushion rubber layer on a winding drum, winding a plurality of load carrying cords on the cushion rubber layer so that the load carrying cords embed in the cushion rubber layer, winding a compression rubber layer directly against the first cushion rubber layer with the load carrying cords embedded therein, and forming a plurality of laterally spaced longitudinally extending ribs in the compression rubber layer, wherein the cords have a denier of 2,000 to 4,000.

An optional canvas layer can be placed over the winding drum before the first cushion rubber layer.

Because the load carrying cords are thin, they readily embed in the underlying cushion rubber layer on the forming drum. This obviates the need for a second cushion rubber layer to be subsequently wrapped over the load carrying cords.

In short, the thickness of the inventive belt is reduced by a) reducing the thickness of the load carrying cords, and b) reducing the required thickness for the cushion rubber layer. A thin belt results which is nonetheless capable of operating effectively under a high load in the serpentine drive system environment.

Reference will now be made, by way of example, to the drawings in which:
FIG. 1 is a cross-sectional perspective view of a V-ribbed belt according to the present invention;
FIG. 2 is a graph showing the relationship between total denier and bending rigidity for a load carrying cord in a V-ribbed belt;
FIG. 3 is a schematic, side elevation view of a test setup for a V-ribbed belt;
FIG. 4 is a graph showing the relationship between the total denier of a load carrying cord and the percentage of cord strength retained after a belt is operated for a predetermined period of time; and
FIG. 5 is a graph showing the relationship between running time and elongation percentage for various test belts.

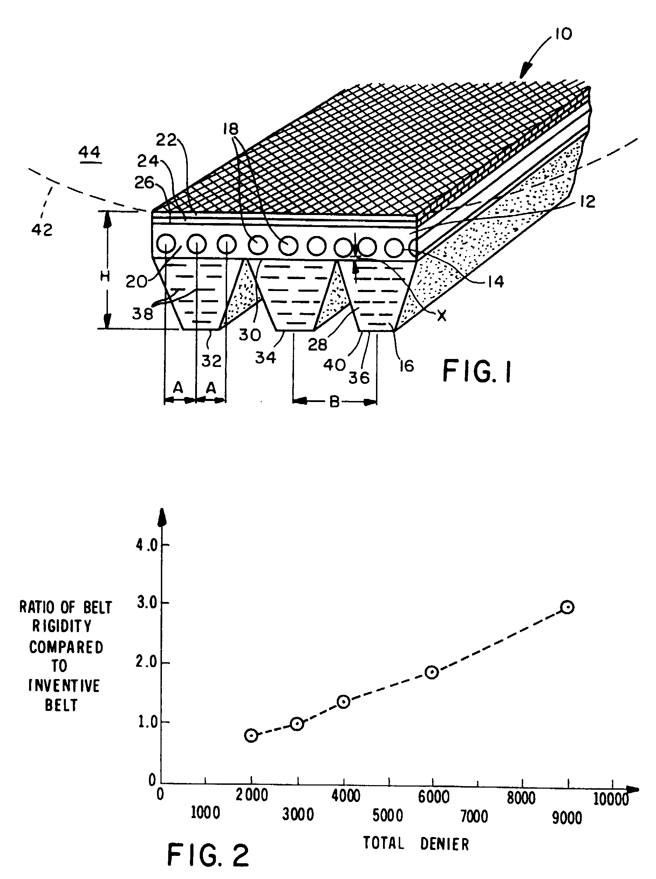

In FIG. 1, a V-ribbed belt, according to the present invention, is shown at 10. The belt 10 consists of a tension section 12, a load carrying section 14, and a compression section 16. A plurality of load carrying cords 18, extending in a lengthwise direction, are embedded in a cushion rubber layer 20, preferably made from rubber such as NR, CR, HNBR, BR, and the like. Two layers 22,24 of bias canvas, with woven warp and weft yarns, are adhered to the outer surface 26 of the cushion rubber layer 20. The yarns in the canvas layers 22,24 are preferably twisted filaments of polyester, polyamide, aramid, and the like.

The compression section 16 is defined by a rubber layer 28, made preferably of the same rubber as the cushion rubber layer 20, and is laminated onto the inside surface 30 of the cushion rubber layer 20. The rubber of the compression section 16 is preferably harder than that of the cushion rubber layer 20. The compression section 16 is cut to define longitudinally extending, V-shaped ribs 32,34,36, with the three ribs shown being only examplary of the number that may be employed.

The compression section 16/ribs 32,34,36 are reinforced by a plurality of short, staple, reinforcing fibers 38, which align generally parallel to each other and extend in a lateral direction. The fibers 38 are preferably made of at least one of natural fiber, polyester, polyamide, and the like.

The load carrying cords 18, according to the present invention, are made preferably from an aromatic polyamide fiber. Each cord 18 is formed by twisting two, and preferably three, individual filaments. Use of only two filaments is not preferred in that in cross-section the twisted filaments assume the shape of a figure eight. The fibers are thus not stably situated with respect to each other and are able to relatively twist about their lengths. Thus, the position of the filaments in the cord 18 is not fixed, even with the cords 18 molded into the cushion rubber layer 20. The filaments may also have an irregular twisting arrangement. With at least three filaments, there is interlocking of the filaments that stabilizes the relative positions thereof.

The invention contemplates that the total denier number for each load carrying cord 18 is 2,000-4,000d. In one preferred form, which was comparatively tested, as described below, each filament preferably has a thickness of 1,000d, so that the entire cord 18 is 3,000d. Each cord has a diameter of approximately 0.81 mm.

The invention further contemplates that the interval A, between the laterally spaced centers of the cords 18, is 1.05-1.2 times as large as the diameter of the individual cords 18. The center lines of the cords, in the one preferred form, are spaced to be 1.10 times the diameter of the cords 18. The resulting cords 18 have a tensile strength of 29 to 69 N (3-7 kgf).

The total thickness H of the belt between the inside surface 40 and the outside surface 26 thereof is, according to the invention, between 0.95 and 1.15 times as large as the pitch B of the ribs 32,34,36. The pitch B is the lateral distance between the center lines for adjacent ribs 32,34,36. In the one preferred form, the total thickness H of the belt is 1.01 times the pitch B for the ribs 32,34,36.

The thickness of X between the inside edge of the cords 18 to the bottom surface 26 of the cushion rubber layer 20 is varied in proportion to the diameter of the core wire. Preferably, the distance X is equal to 45% of the diameter of the load carrying cord 18.

V-ribbed belts are conventionally formed in the following manner. First, the canvas layers 22,24 are wound against the outer surface 42 of a molding drum 44. A first cushion rubber layer is wound over the canvas layers 22,24. The cords 18 are then wound against the first cushion rubber layer after which a second cushion rubber layer is wound over the load carrying cords 18. The compression rubber layer 28 is then wound over the second cushion rubber layer, after which the assembled components are vulcanized and cured. The compression rubber layer 28 is then cut to form the individual ribs 32,34,36.

The present invention comprehends a method which not only simplifies the manufacturing process but also results in a reduced thickness belt. The present invention contemplates that the step of winding a second cushion rubber layer be omitted. That is, only a single cushion rubber layer 28 need be applied over the molding drum 44. The thin load carrying cords 18 contemplated by the invention, during assembly, dig into the single cushion rubber layer 20 so as to be effectively embedded therein. Thus the second cushion rubber layer is unnecessary.

On the other hand, in the conventional manufacturing method, the cords 18 are sufficiently large that they do not fully penetrate the first placed cushion rubber layer when wound in place. The result is that the second layer is necessary to captively adhere the load carrying cords 18. Thus, if one attempted to manufacture V-ribbed belts with conventional load carrying cords over a single cushion rubber layer, the cords would not be effectively adhered to/embedded in the cushion rubber layer.

The following experimental data demonstrates the effectiveness of the present invention.

### Experimental Samples

The V-ribbed belts tested in the following experiment had the same profile and dimensions as that for the belt of the preferred embodiment described above. The only distinction between the belts tested was that the total denier number of the load carrying cords was different. Four V-ribbed belts were compared to the inventive belt having load carrying cords of 3,000d.

### Experiment #1

The flexibility of the V-ribbed belts was measured with the ratio of rigidity for four of the belts compared to that of the inventive belt having load carrying cords of 3,000d. The results are shown in Table 1 and in the graph of FIG. 2.

**TABLE 1**

| Total Denier | Diameter of Cord | Bending Rigidity | % Retention of Cord Strength |
|---|---|---|---|
| 2,000 d | 0.60 | 0.8 | 78 |
| 3,000 d | 0.72 | 1.0 | 75 |
| 4,000 d | 0.85 | 1.4 | 70 |
| 6,000 d | 1.04 | 1.9 | 63 |
| 9,000 d | 1.23 | 3.0 | 52 |

From these results, it can be seen that even though the conventional and inventive belts tested had equal thicknesses, the belts having the thinner load carrying cords were more readily bent, i.e. were more flexible.

### Experiment #2

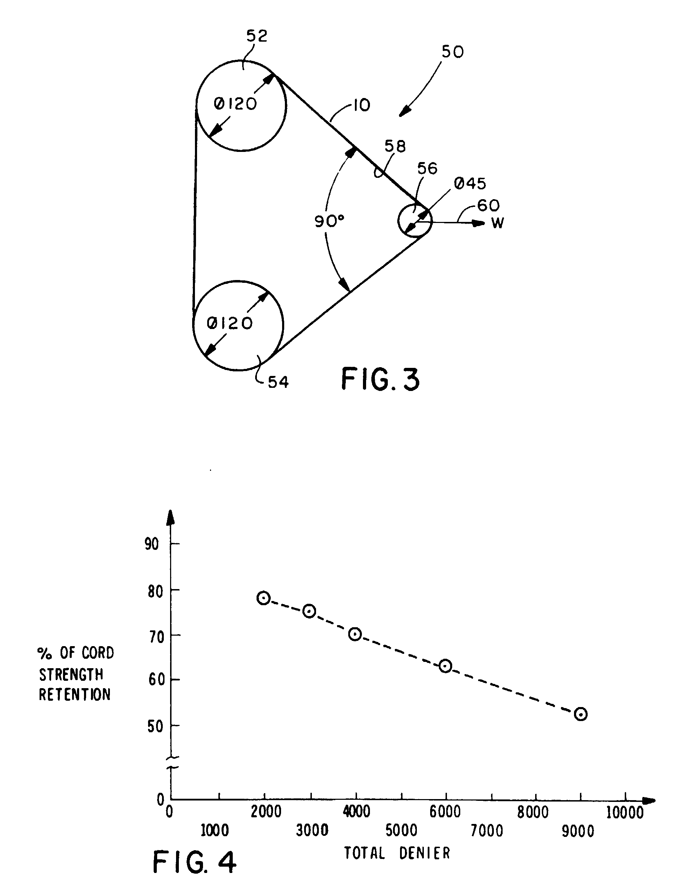

Experimental belts were tested on a system, shown at 50 in FIG. 3. Each test belt 10 was trained around drive and driven pulleys 52,54 and a tensioning pulley 56. Twelve horsepower was transmitted at 4900 rpm. The pulley 56 was borne against the inside surface 58 of the belt 10 with a 294 N (30 kgf) force. This force application is indicated by the letter W being applied in the direction of the arrow 60 to produce a wrap angle of 90°. The belt was operated under these conditions for 500 hours.

The strength of each belt before the operation was compared to that after 500 hours of operation. The data was calculated in terms of percentage, with the results being shown in Table 1 and the graph of FIG. 4.

From that test, it can be seen that when the denier of the load carrying cords is 4,000d or less, the strength and durability of the belt 10 are very high.

### Durability Test

The following V-ribbed belts were constructed and tested for durability.

### Example A

Load carrying cords were formed of aromatic polyamide of 3,000d. The belt height H was 4.3 mm and 1.2 times the rib pitch B.

### Example B

Load carrying cords were formed of aromatic polyamide of 3,000d. The height of the belt was 3.6 mm with the belt pitch B being equal to the height H of the belt.

### Comparison Example C

The load carrying cords were formed of aromatic polyamide with 6,000d. The height H of the belt was 5.2 mm and 1.4 times the rib pitch B.

### Comparison Example D

The load carrying cords were formed of aromatic polyamide with 6,000d. The height H of the belt was 4.5 mm and 1.3 times the rib pitch B.

### Comparison Example E

The load carrying cords were formed of polyester of 6,000d. The height H of the belt was 4.3 mm and 1.2 times the pitch B of the ribs.

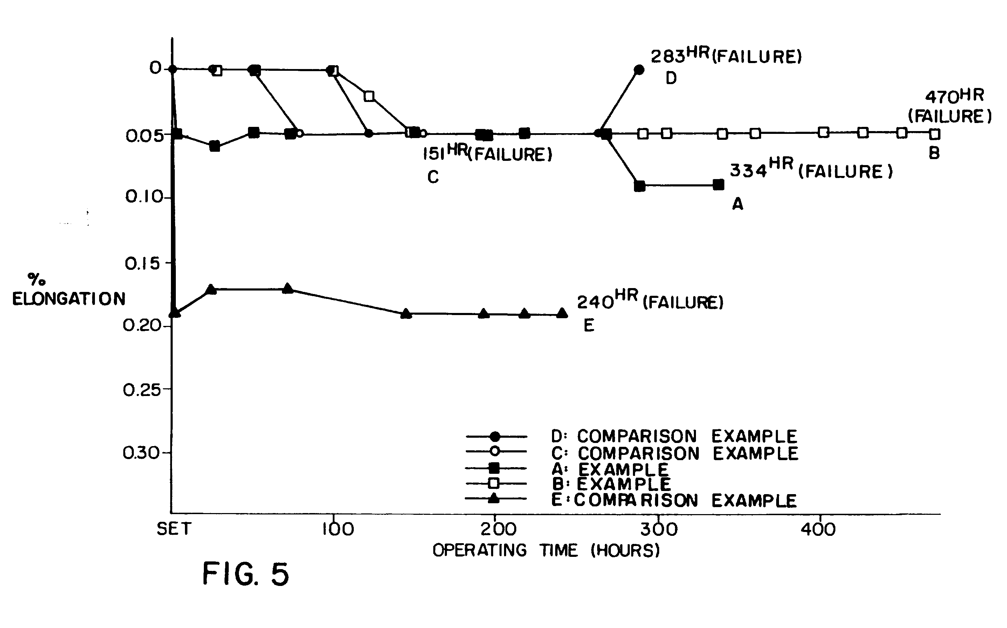

The results of the test are shown in the graph of FIG. 5. The belt of Example A ran for 470 hours and that of Example B for 334 hours. Comparison Examples C, D and E ruptured much earlier than the belts according to the present invention - Examples A & B. The elongation of the belts of Examples A and B was also small compared to that for examples C-E.

The foregoing disclosure of specific embodiments is intended to be illustrative of the broad concepts comprehended by the invention.

## Claims

1. A V-ribbed power transmission belt (10) comprising:
-- a plurality of laterally spaced longitudinally extending ribs (32,34,36);
-- a load carrying section (14); and
-- a plurality of lengthwise cords (18) in the load carrying section (14);
-- wherein the ribs (32,34,36) have laterally spaced centrelines, and
-- wherein the belt (10) has an inside surface (40) and an outside surface (26), **characterised in that**
-- each said cord (18) has a denier of 2,000-4,000d; and
-- the distance (H) between the inside surface (40) of the belt (10) and the outside surface (26) of the belt (10) is 0.95-1.15 times the distance (B) between the centrelines of adjacent ribs (32,34,36).

2. A belt (10) according to claim 1 wherein the load carrying section (14) is defined at least in part by a cushion rubber layer (20), and wherein the plurality of laterally spaced longitudinally extending ribs (32,34, 36) are defined in a compression rubber layer (28).

3. A belt according to claim 2 wherein the cords (18) are embedded in the cushion rubber layer made from at least one of NR,CR, HNBR, and BR.

4. A belt (10) according to claim 2 or 3 wherein the cushion rubber (20) layer has an inside surface (30) and an outside surface (26), and wherein each said lengthwise cord (18) has a diameter with an inside edge and an outside edge and the distance (X) from the inside edge of the cords (18) to the inside surface (30) of the cushion rubber layer (20) is approximately equal to 0.45 times the diameter of the cords (18).

5. A belt (10) according to any of claim 2 or 4 wherein there are short staple reinforcing fibres (38) in the compression rubber layer (28) and extending substantially in a lateral direction, said reinforcing fibres (38) being at least one of natural fibre, polyester, and polyamide.

6. A belt (10) according to any of claims 2 to 5 wherein the cushion rubber layer (20) has an outside surface (36) and an inside surface (30) and there is at least one bias canvas layer (22,24) on the outside of the cushion rubber layer(20).

7. A belt (10) according to any of claims 2 to 6 wherein the compression rubber layer (28) is harder than the cushion rubber layer (20).

8. A belt (10) according to any of claims 1 to 7 wherein each said lengthwise cord (18) has a diameter and a centreline, and the distance (A) between the centrelines of adjacent cords (18) is 1.05-1.20 times as large as the diameter of the cords (18).

9. A belt (10) according to any of claims 1 to 8 wherein the cords (18) are defined by at least two, preferably at least three, twisted filaments.

10. A belt (10) according to any of claims 1 to 9 wherein the cords (18) are made from an aramid fibre or an aromatic polyamide fibre.

11. A method of forming a V-ribbed power transmission belt (10), said method comprising the steps of:
-- winding a first cushion rubber layer (20) on a winding drum (44);
-- winding a plurality of load carrying cords (18) on the first cushion rubber layer (20) so that the load carrying cords (18) embed in the cushion rubber layer (20); and
-- winding a compression rubber layer (28) directly against the first cushion rubber layer (20) with the load carrying cords (18) embedded therein; and forming a plurality of laterally spaced longitudinally extending ribs (32,34,36) in the compression rubber layer (28);
-- wherein the cords (18) have a denier of 2.000-4.000d;
-- wherein the ribs (32,34,36) have laterally spaced centrelines;
-- wherein the belt (10) has an inside surface (40) and an outside surface (26); and
-- wherein the distance (H) between the inside surface (40) of the belt (10) and the outside surface (26) of the belt (10) is 0.95-1.15 times the distance (B) between the centrelines of adjacent ribs (32,34,36).

12. A method according to claim 11 including the step of wrapping a canvas layer (22,24) over the winding drum (44) before the cushion rubber layer (20) is wound on the drum (44).

## Patentansprüche

1. Keilrippen-Treibriemen (10), umfassend eine Anzahl seitlich beabstandeter, sich längs erstreckener Rippen (32, 34, 36), eine lasttragende Zone (14) und eine Anzahl längs erstreckender Korde (18) in der lasttragenden Zone (14), wobei die Rippen seitlich beabstandete Mittellinien besitzen und der Riemen eine innere Oberfläche (40) und eine äußere Oberfläche (26) hat, dadurch gekennzeichnet, dass ein jeder Kord (18) ein Denier von 2000 bis 4000d hat und die Strecke (H) zwischen der inneren Riemenfläche (40) und der äußeren Riemenfläche (26) 0.95 bis 1.15 mal der Strecke (B) zwischen den Mittellinien benachbarter Rippen (32, 34, 36) ist.

2. Riemen (10) nach Anspruch 1, wobei die lasttragende Zone (14) mindestens zum Teil von einer Dämpfungsgummischicht (20) gestellt ist und die Anzahl der seitlich beabstandeten, sich längs erstreckenden Rippen (32, 34 und 36) von einer Druckgummischicht (28) gestellt ist.

3. Riemen (10) nach Anspruch 2, wobei die Korde (18) in der Dämpfungsgummischicht (20) eingebettet sind und die Dämpfungsgummischicht (20) besteht aus mindestens einem Material der Gruppe mit NR, CR, HNBR und BR.

4. Riemen (10) nach Anspruch 2 oder 3, wobei die Dämpfungsgummischicht (20) eine innere Oberfläche (30) und eine äußere Oberfläche (26) aufweist und jeder längslaufende Kord (18) einen Durchmesser mit einer Innenkante und einer Außenkante hat und der Abstand (X) von der Innenkante der Korde (18) zur inneren Oberfläche (30) der Dämpfungsgummischicht (20) ungefähr gleich dem 0,45fachen des Durchmessers der Korde (18) ist.

5. Riemen (10) nach irgendeinem der Ansprüche 2 bis 4, wobei in der Druckgummischicht (28) kurze Verstärkungs-Stapelfasern (38) sind, die im wesentlichen in Querrichtung verlaufen, und die Verstärkungs-Stapelfasern (38) aus mindestens einem Material aus der Gruppe mit Naturfasern, Polyester und Polyamid sind.

6. Riemen (10) nach irgendeinem der Ansprüche 2 bis 5, wobei die Dämpfungsgummischicht (20) eine äußere Oberfläche (36) und eine innere Oberfläche (30) hat und mindestens eine Schrägschnitt-Segeltuchschicht (22, 24) auf der Außenseite der Dämpfungsgummischicht (20) aufweist.

7. Riemen (10) nach irgendeinem der Ansprüche 2 bis 6, wobei die Druckgummischicht (28) härter ist als die Dämpfungsgummischicht (20).

8. Riemen (10) nach irgendeinem der Ansprüche 1 bis 7, wobei der längslaufende Kord (18) einen Durchmesser und eine Mittellinie hat, und der Abstand (A) zwischen den Mittellinien benachbarter Korde (18) das 1,05 bis 1,20fache des Durchmessers der Korde (18) beträgt.

9. Riemen (10) nach irgendeinem der Ansprüche 1 bis 8, wobei die Korde (18) von mindestens zwei, bevorzugt von mindestens drei verdrehten Filamenten gestellt sind.

10. Riemen (10) nach irgendeinem der Ansprüche 1 bis 9, wobei die Korde (18) aus einer Aramidfaser oder einer aromatischen Polyamidfaser sind.

11. Verfahren zur Herstellung eines Keilrippen-Treibriemens (10), wobei das Verfahren die Schritte umfasst: Wickeln einer Dämpfungsgummischicht (20) auf eine Wickeltrommel (44) ; Wickeln einer Anzahl lasttragender Korde (18) auf die Dämpfungsgummischicht (20), so dass sich die lasttragenden Korde (18) in die Dämpfungsgummischicht (20) einbetten; Wickeln einer Druckgummischicht (28) direkt auf die Dämpfungsgummischicht (20) mit den darin eingebetteten, lasttragenden Korden (18); und Bilden einer Anzahl in Querrichtung beabstandeter, längs verlaufender Rippen (32, 34 und 36) in der Druckgummischicht (28); wobei
die Korde (18) ein Denier von 2000 bis 4000d haben;
die Rippen (32, 34, 36) seitlich beabstandete Mittellinien haben;
der Riemen eine innere Fläche (40) und eine äußere Fläche (26) hat;
und die Strecke (H) zwischen der inneren Riemenfläche (40) und der äußeren Riemenfläche (26) 0.95 bis 1.15 mal der Strecke (B) zwischen den Mittellinien benachbarter Rippen (32, 34, 36) ist.

12. Verfahren nach Anspruch 11, umfassend den Schritt des Wickelns einer Segeltuchschicht (22, 24) über die Wikkeltrommel (44), bevor die Dämpfungsgummischicht (20) auf die Trommel (44) gewickelt wird.

## Revendications

1. Courroie (10) de transmission à nervures trapézoïdales, comprenant :
plusieurs nervures longitudinales (32, 34, 36) espacées latéralement,
un tronçon (14) de support de charges, et
plusieurs câbles longitudinaux (18) placés dans le tronçon (14) de support de charges, dans laquelle les nervures (32, 34, 36) ont des axes centraux espacés latéralement, la courroie (10) a une surface interne (40) et une surface externe (26),
caractérisée en ce que chaque câble (18) a un denier compris entre 2 000 et 4 000d, et la distance (H) comprise entre la surface interne (40) de la courroie (10) et la surface externe (26) de la courroie (10) est comprise entre 0,95 et 1,15 fois la distance (B) comprise entre les axes centraux des nervures adjacentes (32, 34, 36).

2. Courroie (10) selon la revendication 1, dans laquelle le tronçon (14) de support de charges est délimité au moins en partie par une couche (20) de caoutchouc d'amortissement, et dans laquelle les nervures longitudinales (32, 34, 36) espacées latéralement sont délimitées dans une couche de caoutchouc de compression (28).

3. Courroie (10) selon la revendication 2, dans laquelle les câbles (18) sont enrobés dans la couche (20) de caoutchouc d'amortissement, et la couche (20) de caoutchouc d'amortissement est formée d'au moins un caoutchouc choisi parmi les caoutchoucs NR, CR, HNBR et BR.

4. Courroie (10) selon la revendication 2 ou 3, dans laquelle la couche (20) de caoutchouc d'amortissement a une surface interne (30) et une surface externe (26), et dans laquelle chaque câble longitudinal (18) a un diamètre avec un bord interne et un bord externe, et la distance (X) comprise entre le bord interne des câbles (18) et la surface interne (30) de la couche (20) de caoutchouc d'amortissement est approximativement égale à 0,45 fois le diamètre des câbles (18).

5. Courroie (10) selon l'une quelconque des revendications 2 à 4, dans laquelle de courtes fibres coupées (38) d'armature sont placées dans la couche (28) de caoutchouc de compression et sont orientées pratiquement en direction latérale, les fibres d'armature (38) étant formées d'au moins un type de fibres parmi les fibres naturelles, les fibres de polyester et les fibres de polyamide.

6. Courroie (10) selon l'une quelconque des revendications 2 à 5, dans laquelle la couche (20) de caoutchouc d'amortissement a une surface externe (36) et une surface interne (30), et une couche de toile en biais au moins (22, 24) est placée à l'extérieur de la couche (20) de caoutchouc d'amortissement.

7. Courroie (10) selon l'une quelconque des revendications 2 à 6, dans laquelle la couche (28) de caoutchouc de compression est plus dure que la couche (20) de caoutchouc d'amortissement,

8. Courroie (10) selon l'une quelconque des revendications 1 à 7, dans laquelle chaque câble longitudinal (18) a un diamètre et un axe central, et la distance (A) comprise entre les axes centraux des câbles adjacents (18) est comprise entre 1,05 et 1,20 fois le diamètre des câblés (18)

9. Courroie (10) selon l'une quelconque des revendications 1 à 8, dans laquelle les câbles (18) sont formés par au moins deux filaments torsadés et de préférence au moins trois filaments.

10. Courroie (10) selon l'une quelconque des revendications 1 à 9, dans laquelle les câbles (18) sont formés d'une fibre d'aramide ou d'une fibre de polyamide aromatique.

11. Procédé de formation d'une courroie (10) de transmission de puissance à nervures trapézoïdales, le procédé comprenant les étapes suivantes :
l'enroulement d'une couche (20) de caoutchouc d'amortissement sur un tambour (44) d'enroulement,
l'enroulement de plusieurs câbles (18) de support de charges sur la couche (20) de caoutchouc d'amortissement afin que les câbles (18) de support de charges s'enrobent dans la couche (20) de caoutchouc d'amortissement,
l'enroulement d'une couche (28) de caoutchouc de compression directement contre la couche (20) de caoutchouc d'amortissement, les câbles (18) de support de charges étant enrobés dans cette couche, et
la formation de plusieurs nervures longitudinales (32, 34, 36) espacées latéralement dans la couche (28) de caoutchouc de compression,
les câbles (18) ayant un denier compris entre 2 000 et 4 000d, et dans lequel les nervures (32, 34, 36) ont des axes centraux espacés latéralement, la courroie (10) a une surface interne (40) et une surface externe (26), et la distance (H) comprise entre la surface interne (40) de la courroie (10) et la surface externe (26) de la courroie (10) est comprise entre 0,95 et 1,15 fois la distance (B) comprise entre les axes centraux des nervures adjacentes (32, 34, 36).

12. Procédé selon la revendication 11, comprenant l'étape d'enroulement d'une couche de toile (22, 24) sur le tambour (44) d'enroulement avant l'enroulement de la couche (20) de caoutchouc d'amortissement sur la tambour (44).
